# EUROPÄISCHE PATENTANMELDUNG

(11) **EP 2 033 851 A2**
(43) Veröffentlichungstag der Anmeldung: **11.03.2009**
(21) Anmeldenummer: 08014572.5
(22) Anmeldetag: 16.08.2008
(51) Int. Cl.: B60R 21/207

(54) **Fahrzeugsitz für ein Kraftfahrzeug**

(30) Priorität: 07.09.2007 DE 102007042744
(71) Anmelder: Daimler AG, 70327 Stuttgart (DE)
(72) Erfinder: Honer, Gerhard, 71263 Weil der Stadt (DE); Stunya, Janos, 71069 Sindelfingen/Maichingen (DE)

(57) **Zusammenfassung**

Die Erfindung betrifft einen Fahrzeugsitz für ein Kraftfahrzeug, insbesondere einen Omnibus, welcher eine Rückenlehne (18) mit einer zugeordneten Kopfstütze (20) und wenigstens ein Schutzelement (22, 30) umfasst, welches aus einer Verstaustellung in eine Schutzstellung bewegbar ist,
wobei das Schutzelement (22) als Seitenteil der Kopfstütze (20) des Fahrzeugsitzes (16) ausgebildet ist, welches in die den Kopf des Sitzinsassen seitlich zumindest teilweise überdeckende Schutzstellung bewegbar ist. Des Weiteren betrifft die Erfindung einen Fahrzeugsitz, bei welchem das Schutzelement (30) mit einem an der Rückenlehne (18) gelagerten Hebel, insbesondere mit einer Armlehne (28), in die Schutzstellung bewegbar ist.

## Beschreibung

Die Erfindung betrifft einen Fahrzeugsitz für ein Kraftfahrzeug, insbesondere einen Omnibus, der in den Oberbegriffen der Patentansprüche 1 bzw. 4 angegebenen Art.

Ein solcher Fahrzeugsitz ist beispielsweise bereits aus der DE 43 05 295 B4 als bekannt zu entnehmen, welcher eine Rückenlehne mit einer zugeordneten Kopfstütze umfasst. Die beiden Seitenwangen der Rückenlehne sind dabei als jeweilige Schutzelemente ausgebildet, welche um eine in Sitzhochrichtung verlaufende Lagerachse aus einer Verstaustellung in eine Schutzstellung bewegbar sind, um hierdurch im Crashfall den Sitzinsassen vor einer Eindringbewegung der Seitenwand und/oder der Tunnelwand des Kraftfahrzeugs zu schützen.

In ähnlicher Weise werden beim Fahrzeugsitz aus der FR 2 899 850 A1 die Seitenwangen sowohl der Rücklehne als auch der Sitzfläche bei einer Belastung der Sitzfläche seitlich an den Sitzinsassen herangeführt, um seine Sitzposition zu stabilisieren.

Ein weiterer derartiger Fahrzeugsitz ist darüber hinaus aus der DE 197 00 507 C2 als bekannt zu entnehmen, bei welchem außenseitig der Rückenlehne ein kastenartiges Aufbewahrungsgehäuse vorgesehen ist, aus welchem ein Schutzelement in Form eines Airbags im Falle eines Seitenaufpralls auf den Kraftwagen austritt.

Eine andere Form des Seitenaufprallschutz wird in der US 5 524 960 A in Form einer Armlehne gezeigt, die dazu ausgelegt ist, bei einem seitlichen Aufprall Stoßenergie durch Verformung zu absorbieren.

Durch die jeweiligen Schutzelemente wird somit ein Schutz insbesondere des Oberkörpers - also des Bereichs zwischen der Hüfte und dem Kopf des Sitzinsassen erreicht.

Für den Schutz des Kopfbereiches wird in der DE 39 30 171 A1 ein Fahrzeugsitz für ein Kraftfahrzeug mit abnehmbarem Dach beschrieben, bei dem im Falle eines Überschlags des Fahrzeugs die Kopfstütze durch Ausfahren eines Überrollbügels verlängert wird.

In der DE 299 18 981 U1 wird ein Fahrgastsitz beschrieben, bei dem die Rückenlehne mit einer Stoßenergie-Absorptionseinrichtung zur Aufnahme der Aufprallenergie eines auf die Rückseite der Rückenlehne aufprallenden Fahrzeuginsassens ausgestattet ist. Für den Fall, dass ein Fahrinsasse bei einem Frontalaufprall mit dem Kopf nach vorn gegen die Rückenlehne dieses Fahrzeugsitzes prallt, wird somit der Stoß durch die Energieabsorptionseinrichtung gedämpft.

Eine seitliche Stützung des Kopfes des Fahrzeugsitzinsassens ist aus dem Komfortbereich bekannt. In der US 6 120 099 A wird eine Kopfstütze gezeigt, bei der seitlich zwei Polsterflügel ausziehbar sind, um als seitliche Stütze für den Kopf zu dienen. In der DE 102 09 187 C1 wird eine Kopfstütze mit einem Mittelpolster und seitlich dazu angelegten Seitenpolstern beschrieben, wobei die Seitenpolster in der Weise gegen das Mittelpolster verschwenkt werden können, dass die drei Polster eine muldenförmige Polsterfläche zum Ablegen des Kopfes bilden.

Aufgabe der vorliegenden Erfindung ist es daher, einen Fahrzeugsitz der eingangs genannten Art zu schaffen, mit welchem weitere Körperbereiche des Sitzinsassen auf zuverlässige Weise im Falle einer Kollision des Kraftfahrzeugs zu schützen sind.

Diese Aufgabe wird erfindungsgemäß durch einen Fahrzeugsitz mit den Merkmalen der Patentansprüche 1 bzw. 4 gelöst. Vorteilhafte Ausgestaltungen mit zweckmäßigen und nicht-trivialen Weiterbildungen der Erfindung sind in den jeweils abhängigen Ansprüchen angegeben.

Um einen Fahrzeugsitz zu schaffen, mittels welchem der Kopf der Sitzinsassen auf verbesserte Weise zu schützen ist, ist erfindungsgemäß ein Schutzelement vorgesehen, welches als Seitenteil der Kopfstütze des Fahrzeugsitzes ausgebildet ist, wobei das Schutzelement in eine den Kopf des Sitzinsassen seitlich zumindest teilweise überdeckende Schutzstellung bewegbar ist. Mit anderen Worten ist es erfindungsgemäß vorgesehen, seitlich der Kopfstütze wenigstens ein Schutzelement - und vorzugsweise zwei Schutzelemente - vorzusehen, so dass der Kopf zumindest teilweise in seitlicher Überdeckung mit dem jeweiligen Schutzelement liegt. Dabei ist zu berücksichtigen, dass sich der Kopf des Sitzinsassen zumindest dann in teilweise Überdeckung mit dem in die Schutzstellung überführten Schutzelement befindet, wenn der Hinterkopf des Sitzinsassen an der Kopfstütze anliegt.

Da das bzw. die Schutzelemente seitlich der Kopfstütze als Seitenteile ausgebildet sind, können diese somit sehr nahe des Kopfes in die Schutzstellung bewegt werden, so dass diese äußerst nahe seitlich des Kopfes positioniert sind. Hierdurch ergeben sich optimale Schutzeigenschaften der Schutzelemente beispielsweise bei einem Seitenaufprall auf das Kraftfahrzeug.

Die Kopfstütze kann dabei sowohl als separates Teil ausgebildet sein, welches über entsprechende Führungsstangen an der korrespondierenden Rückenlehne gehalten ist. Insbesondere ist es jedoch denkbar, dass die Schutzelemente bei einer integral an einer Rückenlehne angeordneten Kopfstütze bzw. einem solchem Kopfstützenbereich der Rückenlehne vorzusehen.

In weiterer Ausgestaltung der Erfindung hat es sich als zudem vorteilhaft gezeigt, wenn zwei Seitenteile bzw. Schutzelemente der Kopfstütze vorgesehen sind, welche in ihrer Schutzstellung mit einem zentralen Teil der Kopfstütze eine im Querschnitt bogenförmige bzw. U-förmige Kontur bilden. Hierdurch wird eine besonders zuverlässige, schützende Einfassung des Kopfes des Sitzinsassen geschaffen, wenn die beiden Seitenteile in ihre jeweilige Schutzstellung überführt worden sind.

Als weiterhin vorteilhaft hat es sich gezeigt, wenn eine bogenförmige Aktivierungseinrichtung vorgesehen ist, mittels welcher dem jeweiligen Schutzelement zugeordnete Aktivierungselemente in bogenförmiger Erstreckung der Aktivierungseinrichtung bzw. in bogenförmiger Bewegungsrichtung ausfahrbar sind. Hierdurch kann auf besonders schnelle und zuverlässige Weise die wünschenswerte bogenförmige bzw. U-förmige Querschnittskontur - gebildet durch die beiden Seitenteile und dem zentralen Teil der Kopfstütze - erreicht werden.

Um einen Fahrzeugsitz zu schaffen, mittels welchem insbesondere das Becken bzw. die Oberschenkel des Sitzinsassen auf verbesserte Weise zu schützen sind, ist es gemäß Patentanspruch 4 vorgesehen, dass das wenigstens eine Schutzelement mit einem an der Rückenlehne gelagerten Hebel, insbesondere mit einer Armlehne, in die Schutzstellung bewegbar ist. Mit anderen Worten ist es erfindungsgemäß vorgesehen, wenigstens ein - und vorzugsweise zwei seitliche Schutzelemente vorzusehen, welche sich in ihrer Schutzstellung zwischen der Armlehne und dem Sitzkissenteil des Fahrzeugsitzes erstrecken. Hierdurch ist ein besonders zuverlässiger Schutz des Beckens bzw. der Oberschenkel des Sitzinsassen beispielsweise bei einem Seitenaufprall des Kraftwagens bzw. des Omnibusses möglich.

Als weiterhin vorteilhaft hat es sich gezeigt, wenn die Grundkontur des Schutzelements in der Schutzstellung und in der Verstaustellung im Wesentlichen gleich ist. Mit anderen Worten muss hierbei das jeweilige Schutzelement nicht in seiner Kontur vergrößert werden, um in der jeweiligen Schutzstellung seine Schutzfunktion auszuüben. Somit können besonders schnelle Reaktionszeiten eingehalten werden.

Als weiterhin vorteilhaft hat es sich gezeigt, wenn das Schutzelement in einer zweiten Bewegungsphase der Armlehne von dieser mitzunehmen ist. Mit anderen Worten ist es hierbei vorgesehen, dass die Armlehne zunächst ein Stück weit verlagert wird, ohne dass hierbei das Schutzelement mitgenommen wird. In einer zweiten Bewegungsphase der Armlehne wird dann das Schutzelement mitgenommen und entsprechend in seine Schutzstellung überführt.

In weiterer Ausgestaltung der Erfindung hat es sich als zudem vorteilhaft gezeigt, wenn zwischen dem jeweiligen, der Kopfstütze und der Armlehne zugeordneten Schutzelement ein weiteres, mittleres Schutzelement angeordnet ist, welches aus seiner Verstaustellung in eine Schutzstellung bewegbar ist. Somit ist es insgesamt bei einem Fahrzeugsitz möglich, einen Schutz für den Kopf - gemäß Patentanspruch 1 -, einen Schutz für das Becken und die Oberschenkel - gemäß Patentanspruch 4 -, und einen Schutz für die Arme bzw. den Torso durch das mittlere Schutzelement zu schaffen, so dass der Sitzinsasse aufwärts seiner Oberschenkel aufs Beste beispielsweise vor einem Seitenaufprall geschützt ist.

Die beiden mittleren Schutzelemente bilden dabei bevorzugt eine im Querschnitt bogenförmige bzw. U-förmige Grundkontur in ihrer Schutzstellung, so dass der menschliche Körper in einem Bereich auf Höhe seiner Arme besonders gut geschützt ist.

In weiterer Ausgestaltung der Erfindung ist darüber hinaus an einer Rückseite der Rückenlehne ein rückwärtiges Schutzelement vorgesehen, damit eine dahinter sitzende Person einer rückwärtig angeordneten Fahrzeugsitzreihe einen entsprechenden Schutz hat, wenn der Kopf beispielsweise in Folge eines Frontalaufpralls des Kraftwagens bzw. des Omnibusses peitschenartig nach vorne verlagert wird.

In weitere Ausgestaltung der Erfindung hat es sich darüber hinaus als vorteilhaft gezeigt, wenn der Fahrzeugsitz einen Überrollbügel aufweist, der im Falle eines Überschlags des Omnibusses dafür sorgt, dass ein hinreichender Überlebensraum für den Sitzinsassen innerhalb des Fahrzeugsitzes verbleibt. Dabei hat es sich in weiterer Ausgestaltung der Erfindung als vorteilhaft gezeigt, wenn jedem Fahrzeugsitz ein Sicherheitsgurt, insbesondere ein so genannter Drei-Punkt-Sicherheitsgurt, zugeordnet ist. Hierdurch wird insbesondere sichergestellt, dass der Sitzinsasse im Falle einer Kollision de Kraftfahrzeugs in einer optimalen Position innerhalb des Fahrzeugsitzes verbleibt.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:

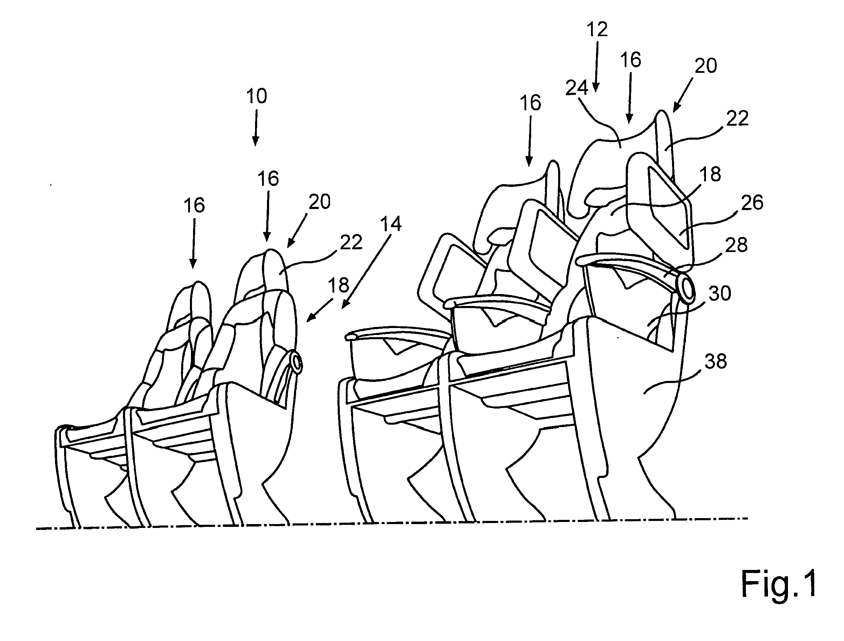

- Fig. 1: eine schematische Perspektivansicht auf eine Fahrzeugsitzreihe mit zwei durch einen Mittelgang unterteilten Fahrzeugsitzpaaren innerhalb eines Fahrgastraums eines Omnibusses, wobei jeder Fahrzeugsitz jeweilige Schutzelemente auf Höhe einer Kopfstütze, unterhalb einer Armlehne und zwischen der Kopfstütze und der Armlehne aufweist, und wobei die Schutzelemente des hier beim linken Fahrzeugsitzpaar erkennbaren Verstaustellung in eine beim rechten Fahrzeugsitzpaar erkennbare Schutzstellung bewegt worden sind;

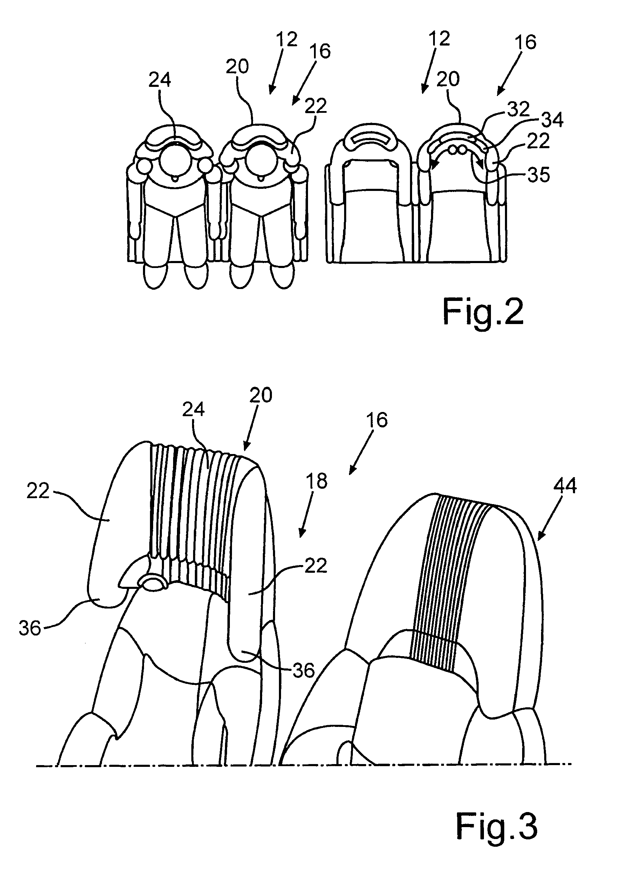

- Fig. 2: eine schematische Draufsicht auf zwei jeweilige Fahrzeugsitzpaare gemäß Fig. 1, wobei insbesondere jeweilige, als Seitenteile der Kopfstütze des Fahrzeugsitzes ausgebildete Schutzelemente dargestellt sind, welche mittels von Aktivierungselementen einer Aktivierungseinrichtung aus der jeweiligen Verstaustellung in die jeweilige Schutzstellung bewegt worden sind, wodurch diese mit einem zentralen Teil der Kopfstütze eine im Querschnitt bogenförmige bzw. U-förmige Kontur bilden, welche seitlich zumindest teilweise den Kopf des Sitzinsassen überdeckt;
- Fig. 3: eine schematische und ausschnittsweise seitliche Perspektivansicht auf eine jeweils integral der korrespondierenden Rückenlehne ausgebildete Kopfstütze, wobei bei der linken Kopfstütze die beiden Schutzelemente bzw. Seitenteile der Kopfstütze aus der in der rechten Darstellung gezeigten Verstaustellung in die Schutzstellung bewegt worden sind;

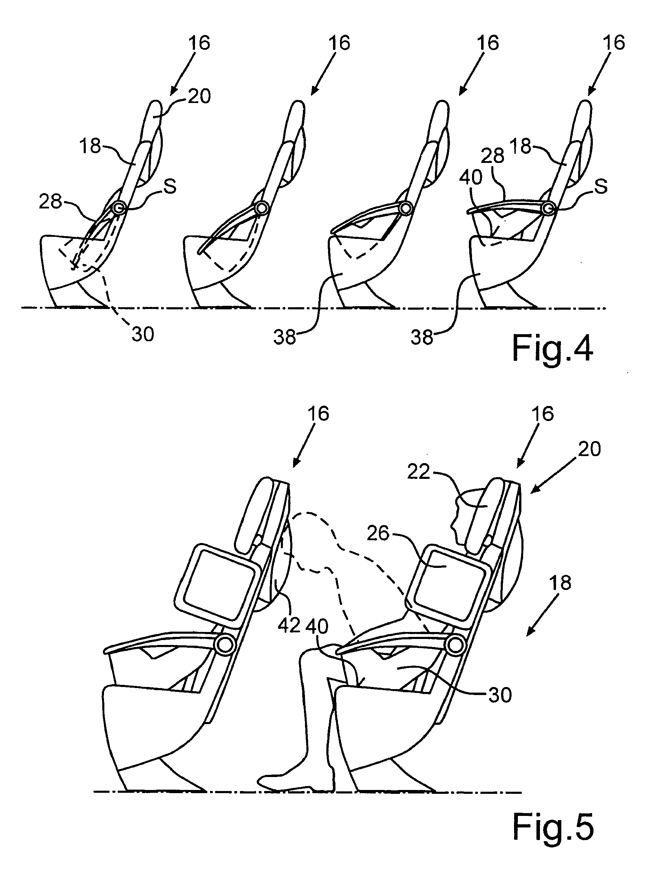

- Fig. 4: eine schematische Seitenansicht des Ablaufs der Verlagerungsbewegung eines der unterhalb der Armlehnen angeordneten Schutzelemente zum Schutz des Beckens bzw. des jeweiligen Oberschenkels, wobei das Schutzelement mit der Armlehne aus der Verstaustellung in die Schutzstellung bewegt wird; und in
- Fig. 5: eine schematische Seitenansicht auf zwei hintereinander angeordnete Fahrzeugsitze im Innenraum eines Omnibusses, wobei an der Rückseite der vorderen Rückenlehne ein rückwärtiges Schutzelement aus einem weichen Material vorgesehen ist, welches zur weichen Abstützung des Kopfes eines auf dem dahinter liegenden Fahrzeugsitz positionierten Sitzinsassen dient, falls dessen Kopf in Folge einer unfallbedingten Kraftbeaufschlagung nach vorne in Richtung des vorderen Fahrzeugsitzes bewegt wird, und wobei die Schutzelemente beider Fahrzeugsitze in ihrer jeweiligen Schutzstellung gezeigt sind.

In Fig. 1 ist in einer schematischen Perspektivansicht eine Fahrzeugsitzreihe mit zwei Fahrzeugsitzpaaren 10, 12 beispielsweise im Innenraum eines Omnibusses dargestellt, wobei die beiden Fahrzeugsitzpaare 10, 12 durch einen Mittelgang 14 voneinander separiert sind. Das linke Fahrzeugsitzpaar 10 zeigt dabei zwei im Wesentlichen identisch ausgebildete Fahrzeugsitze 16, welche in ihrer Ausgangsstellung - also vor einer Kollision des Omnibusses - dargestellt sind.

Demgegenüber zeigt das rechte Fahrzeugsitzpaar 12 zwei Fahrzeugsitze 16 während bzw. nach einer entsprechenden Kollision des Omnibusses.

Zunächst ist dabei aus der linken Darstellung von Fig. 1 erkennbar, dass die beiden Fahrzeugsitze 16 jeweils eine Rückenlehne 18 umfassen, an deren oberen Ende als jeweils integraler Bestandteil eine zugeordnete Kopfstütze 20 angeordnet ist. Demzufolge handelt es sich bei den vorliegenden Fahrzeugsitzen 16 um Integralsitze. Die vorliegend im weiteren noch bestehende Erfindung kann jedoch auch bei Fahrzeugsitzen 16 angewandt werden, welche eine separate, durch die Rückenlehne 18 getragenen Kopfstütze 20 aufweisen.

Bei dem rechten Fahrzeugsitzpaar 12 ist nun erkennbar, dass die Kopfstütze 20 jedes Fahrzeugsitzes 16 zwei als Schutzelemente 22 ausgebildete Seitenteile umfasst, welche außenseitig eines zentralen Teils 24 der Kopfstütze 20 angeordnet sind. Diese jeweiligen zwei Schutzelemente 22 pro Kopfstütze 20 sind aus einer vom linken Fahrzeugsitzpaar 10 dargestellten Verstaustellung in eine beim rechten Fahrzeugsitzpaar 12 dargestellte Schutzstellung auf im weiteren noch näher beschriebene Weise bewegbar. Dabei werden die Seitenteile 22 jeweils seitlich nach schräg außen vorne bewegt, um den Kopf des Sitzinsassen beispielsweise bei einem Seitenaufprall besser abfangen bzw. die Einwirkungen auf den Kopf abmildern zu können.

Unterhalb der Schutzelemente 22 sind jeweils weitere, mittlere Schutzelemente 26 erkennbar, welche seitlich der jeweils korrespondierenden Rückenlehne 18 - und oberhalb von jeweiligen Armlehnen 28 positioniert sind. Die mittleren Schutzelemente 26 dienen dabei insbesondere zum Schutz der Arme bzw. des Torsos des jeweiligen Sitzinsassen, wobei die mittleren Schutzelemente 26 vorliegend eine im Wesentlichen rechteckförmige Grundkontur aufweisen und relativ zur Rückenlehen 18 nach vorne hin abragen. In Zusammenschau des rechten und linken Fahrzeugsitzpaars 10, 12 ist dabei erkennbar, dass die mittleren Schutzelemente 26 beispielsweise durch jeweilige Airbags gebildet sind, welche außenseitig aus den Seitenwangen der Rückenlehne 18 austreten.

Unterhalb der jeweiligen Armlehne 28 ist jeweils ein weiteres Schutzelement 30 vorgesehen, welches vorliegend im Wesentlichen V-förmig gestaltet ist und im Wesentlichen zum Schutz des Beckens bzw. des jeweiligen Oberschenkels des Sitzinsassen dient.

Insgesamt ist somit insbesondere durch das rechte Fahrzeugsitzpaar 12 ein Gesamtkonzept zum Schutz des jeweiligen Sitzinsassen erkennbar, wobei dessen Kopf durch die oberen Schutzelemente 22, dessen Arme bzw. dessen Torso durch die mittleren Schutzelemente 26 und dessen Becken bzw. Oberschenkel durch die unteren Schutzelemente 30 beispielsweise gegen einen Seitenaufprall geschützt ist bzw. sind. Dabei werden die jeweiligen Schutzelemente 22, 26, 30 aus der beim linken Fahrzeugsitzpaar 10 gezeigten Verstaustellung in die jeweilige, beim rechten Fahrzeugsitzpaar 12 gezeigte Schutzstellung auf im Weiteren noch näher beschriebene Weise überführt.

Anhand der Fig. 2 und 3 soll nun insbesondere die Funktionsweise der oberen Schutzelemente 22 zum Schutz des Kopfes des Sitzinsassen näher erläutert werden. Hierzu zeigt Fig.2 eine schematische Draufsicht auf ein jeweiliges Fahrzeugsitzpaar 12, wobei das linke Fahrzeugsitzpaar 12 durch Sitzinsassen belegt ist. Fig. 3 zeigt hingegen in einer ausschnittsweisen und schematischen, seitlichen Perspektivansicht die Kopfstütze 20 mit den Schutzelementen 22 bzw. Seitenteilen, welche sich beim rechten Fahrzeugsitz 16 in ihrer Verstaustellung und beim linken Fahrzeugsitz 16 in ihrer Schutzstellung befinden.

Anhand der rechten Darstellung von Fig. 2 wird erkennbar, dass die beiden Schutzelemente 22 bzw. Seitenteile der jeweiligen Kopfstütze 20 eine im Wesentlichen bogenförmige Aktivierungseinrichtung 32 umfassen, wobei dem jeweiligen Schutzelement 22 jeweils ein Aktivierungselement 34 zugeordnet ist, welches in bogenförmiger Erstreckung der Aktivierungseinrichtung 32 seitlich nach schräg vorne ausfahrbar ist.

Dies ist mit den Teilen 35 dargestellt. Im Ergebnis wird somit über die Aktivierungselemente 34 der Aktivierungseinrichtung 32 erreicht, dass die Seitenteile bzw. Schutzelemente 22 in eine Schutzstellung gebracht werden, in welcher diese den Kopf des Sitzinsassen seitlich zumindest teilweise überdecken. Dies wird insbesondere aus der linken Darstellung gemäß Fig. 2 erkennbar.

Dabei wird insbesondere erkennbar, dass die in ihrer Schutzstellung positionierten Schutzelemente 22 zumindest den hinteren Teilbereich des jeweiligen Kopfes des Sitzinsassen seitlich ab- bzw. überdecken, wenn sich dessen jeweiliger Hinterkopf an dem zentralen Teil 24 der Kopfstütze 20 abstützt. Somit ist insbesondere aus Fig. 2 erkennbar, dass die beiden Schutzelemente 22 in ihrer Schutzstellung gemeinsam mit dem zentralen Teil 24 eine im Querschnitt bogenförmige bzw. U-förmige Kontur bilden, welche den Kopf des Sitzinsassen rückwärtig bzw. seitlich umgreift. Somit wird bei einem Aufprall eine entsprechende Einfassung bzw. Halterung des Kopfes des Sitzinsassen erreicht.

Aus Fig. 3 wird darüber hinaus insbesondere die konkrete Form der Seitenteile bzw. Schutzelemente 22 der Kopfstütze 20 erkennbar. Dabei ist insbesondere erkennbar, dass die Seitenteile bzw. Schutzelemente 22 jeweils einen nach unten überstehenden Wulst 36 umfassen, so dass der Kopf des Sitzinsassen nach unten hin besonders gut geschützt ist. Des Weiteren sind in Zusammenschau der beiden Kopfstützen 20 in Fig. 3 erkennbar, dass der zentrale Teil 24 ziehharmonikaartig verlängerbar ist, damit die beiden Schutzelemente 22 nach schräg außen vorne bewegt werden können.

In Fig. 4 ist eine Abfolge einer Schwenkbewegung der korrespondierenden Armlehne 28 anhand von vier Seitenansichten auf den jeweiligen Fahrzeugsitz 16 dargestellt, wobei mit dieser Verlagerung der Armlehne 28 eine Bewegung des korrespondierenden Schutzelements 30 aus der in der linken Darstellung gezeigten Darstellung in die äußerst rechts gezeigte Schutzstellung erfolgt. Die Armlehne 28 bildet dabei einen im Bereich einer Schwenkachse S an der Rückenlehne 18 gelagerten Hebel, mit welchem das korrespondierende Schutzelement 22 aus der äußerst links in Fig. 4 gezeigten Verstaustellung in die äußerst rechts in Fig. 4 gezeigte Schutzstellung zu überführen ist. In Zusammenschau mit Fig. 1 ist dabei erkennbar, dass das jeweilige Schutzelement 30 in seiner Verstaustellung innerhalb eines verbreiterten Fußteils 38 des jeweiligen Fahrzeugsitzes 16 aufgenommen ist.

Des weiteren ist insbesondere aus Fig. 4 erkennbar, dass in einer ersten Bewegungsphase der Armlehne 28 um die Schwenkachse S das Schutzelement 30 noch an Ort und Stelle verbleibt.

Sobald die Armlehne 28 die Position gemäß der zweiten Darstellung von links in Fig. 4 erreicht hat, beginnt eine entsprechende Mitnahme des Schutzelements 30, welches ebenfalls um die Schwenkachse S mitverschwenkt wird. Die zweite Darstellung von rechts in Fig. 4 zeigt dabei eine Zwischendarstellung während der zweiten Bewegungsphase der Armlehne 28, während welcher das Schutzelement 30 entsprechend mitgenommen bzw. mitverschwenkt wird, bis dieses schließlich seine Schutzstellung gemäß der rechten Darstellung in Fig. 4 erreicht hat. Dabei erstreckt sich das Schutzelement 30 von der Unterseite der Armlehne 28 bis zu einer Sitzfläche 40 des jeweiligen Fahrzeugsitzes 16, wobei das Schutzelement 30 nach wie vor mit einem unteren Bereich in das Fußteil 38 eintaucht.

Die jeweiligen Schutzelemente 30 bilden dabei einen Schutz des Beckens bzw. der Oberschenkel des Sitzinsassen beispielsweise bei einem Seitenaufprall.

Schließlich zeigt Fig. 5 in einer schematischen Seitenansicht zwei hintereinander angeordnete Fahrzeugsitze 16, deren jeweilige Schutzelemente 22, 26, 30 aus ihrer jeweiligen Verstaustellung in ihre hier gezeigte Schutzstellung bewegt worden sind. Im Bereich des hinteren Fahrzeugsitzes 16 sind dabei die Umrisse eines Sitzinsassen erkennbar, wodurch insbesondere deutlich wird, dass die Seitenteile bzw. Schutzelemente 22 der Kopfstütze 20 den Kopf des Sitzinsassen zumindest teilweise seitlich überdecken, sofern sich dessen Hinterkopf entsprechend an der Kopfstütze 20 bzw. dem zentralen Teil 24 abstützt.

Wird der Sitzinsasse hingegen - wie mit der zweiten Kontur dargestellt - aufgrund einer unfallbedingten Kraftbeaufschlagung mit seinem Kopf nach vorne verlagert, so trifft dieser auf ein rückwärtiges Schutzelement 42 auf, welches an der Rückseite des vorderen Fahrzeugsitzes 16 angeordnet ist. Dieses rückwärtige Schutzelement 42 kann beispielsweise aus einem weichen Material gestaltet sein. Im vorliegenden Ausführungsbeispiel wird das rückwärtige Element 42 nicht aus einer Verstaustellung in eine Schutzstellung überführt, sondern verbleibt vielmehr an Ort und Stelle. Als im Rahmen der Erfindung mitumfasst ist es jedoch zu betrachten, dass auch diese Schutzelement 42 entsprechend in Abhängigkeit eines Aufpralls ausgefahren bzw. flächenbewegt werden könnte.

Darüber hinaus wird aus Fig. 5 die genaue Kontur des mittleren Schutzelements 26 erkennbar, mittels welchem insbesondere die Arme bzw. der Torso des Sitzinsassen zu schützen sind. Dabei ist festzuhalten, dass die einzelnen Schutzelemente 22, 26, 30, 42 jeweils entweder aus einem weichen, entsprechend elastischen und ggf. energieabsorbierenden Material bestehen, oder aber als Airbags ausgebildet sind. Andere Gestaltungen sind ebenfalls denkbar. Dabei können die einzelnen Schutzelemente 22, 26, 30, 42 ggf. mechanisch oder pyrotechnisch aus ihrer jeweiligen Verstaustellung in ihre korrespondierende Schutzstellung überführt bzw. bewegt werden.

Insgesamt ist jedoch insbesondere aus Fig. 5 erkennbar, dass somit ein Sicherheitskonzept für einen Sitzinsassen geschaffen ist, so dass dieser zwischen seinen Oberschenkel und seinem Kopf auf besonders vorteilhafte Weise durch die drei, jeweils seitlichen Schutzelemente 22, 26, 30 geschützt ist. Insgesamt wird somit ein optimaler Überlebensraum für den Sitzinsassen möglich, so dass dieser Kollisionen beispielsweise des Omnibusses möglichst unbeschadet übersteht.

Dabei weist der Fahrzeugsitz 16 jeweils bevorzugter Weise einen Sicherheitsgurt, und insbesondere einen Drei-Punkt-Sicherheitsgurt auf, um den Sitzinsassen bei einer Kollision an einer optimalen Position innerhalb des Fahrzeugsitzes 16 zu halten.

Des Weitern hat es sich als vorteilhaft gezeigt, wenn jeder Fahrzeugsitz 16 insbesondere im Bereich der Kopfstütze 20 einen integrierten Überrollbügel 44 aufweist. Dieser kann - wie im vorliegenden Fall - von außen her im Wesentlichen nicht erkennbar in den Fahrzeugsitz 16 integriert sein. Als im Rahmen der Erfindung mitumfasst ist es jedoch zu betrachten, dass der Überrollbügel 44 auch von außen her erkennbar angeordnet sein kann. Insgesamt wird durch den Überrollbügel 44 dabei erreicht, dass beispielsweise bei einem Überschlag des Omnibusses ein Überlebensraum für den Sitzinsassen innerhalb des jeweiligen Fahrzeugsitzes 16 verbleibt, so dass dieser den Überschlag zumindest weitestgehend verletzungsfrei übersteht.

## Patentansprüche

1. Fahrzeugsitz für ein Kraftfahrzeug, insbesondere einen Omnibus, welcher eine Rückenlehne (18) mit einer zugeordneten Kopfstütze (20) und wenigstens ein Schutzelement (22, 30) umfasst, welches aus einer Verstaustellung in eine Schutzstellung bewegbar ist,
**dadurch gekennzeichnet,**
**dass** das Schutzelement (22) als Seitenteil der Kopfstütze (20) des Fahrzeugsitzes (16) ausgebildet ist, und die Kopfstütze (20) eine Aktivierungseinrichtung (32) aufweist, durch welche das Schutzelement (22) im Falle einer Kollision des Kraftfahrzeugs in die den Kopf des Sitzinsassen seitlich zumindest teilweise überdeckende Schutzstellung bewegbar ist.

2. Fahrzeugsitz nach Anspruch 1,
**dadurch gekennzeichnet,**
**dass** zwei Seitenteile (22) der Kopfstütze vorgesehen sind, welche in ihrer Schutzstellung mit einem zentralen Teil (24) der Kopfstütze (20) eine im Querschnitt bogenförmige bzw. U-förmige Kontur bilden.

3. Fahrzeugsitz nach Anspruch 2,
**dadurch gekennzeichnet,**
**dass** den Schutzelementen (22) eine im Wesentlichen bogenförmige Aktivierungseinrichtung (32) zugeordnet ist, wobei dem jeweiligen Schutzelement (22) zugeordnete Aktivierungselemente (34) in bogenförmiger Erstreckung der Aktivierungseinrichtung (32) ausfahrbar sind.

4. Fahrzeugsitz für einen Kraftfahrzeug, insbesondere einem Omnibus, nach dem Oberbegriff des Patentanspruchs 1,
wobei das Schutzelement (30) mit einem an der Rückenlehne (18) gelagerten Hebel, insbesondere mit einer Armlehne (28), in die Schutzstellung bewegbar ist, und wobei die Grundkontur des Schutzelements (30) in der Schutzstellung und der Verstaustellung im Wesentlichen gleich ist,
**dadurch gekennzeichnet,**
**dass** sich das Schutzelement (30) in der Schutzstellung zwischen der Armlehne (28) und dem Sitzkissenteil (40) des Fahrzeugsitzes erstreckt.

5. Fahrzeugsitz nach Anspruch 4,
**dadurch gekennzeichnet,**
**dass** das Schutzelement (30) in einer zweiten Bewegungsphase der Armlehne (28) von dieser mitzunehmen ist.

6. Fahrzeugsitz nach Anspruch 1 und 4,
**dadurch gekennzeichnet,**
**dass** zwischen den jeweiligen, der Kopfstütze (20) und der Armlehne (28) zugeordneten Schutzelement (22, 30) ein weiteres, mittleres Schutzelement (26) angeordnet ist, welches aus einer Verstaustellung in eine Schutzstellung bewegbar ist.

7. Fahrzeugsitz nach Anspruch 6,
**dadurch gekennzeichnet,**
**dass** zwei mittlere Schutzelemente (26) vorgesehen sind, welche in ihrer Schutzstellung mit der Rückenlehne (18) eine im Querschnitt bogenförmige bzw. U-förmige Kontur bilden.

8. Fahrzeugsitz nach einem der vorherigen Ansprüche 1 bis 7,
**dadurch gekennzeichnet,**
**dass** an einer Rückseite der Rückenlehne (18) ein rückwärtiges Schutzelement (42) vorgesehen ist.

9. Fahrzeugsitz nach Anspruch 8,
**dadurch gekennzeichnet,**
**dass** das rückwärtige Schutzelement (42) im Wesentlichen aus einem weichen Material gebildet ist.

10. Fahrzeugsitz nach einem der vorherigen Ansprüche 1 bis 9,
**dadurch gekennzeichnet,**
**dass** der Fahrzeugsitz (16) einen Überrollbügel (44) aufweist.

11. Fahrzeugsitz nach einem der vorherigen Ansprüche 1 bis 10,
**dadurch gekennzeichnet,**
**dass** der Fahrzeugsitz (16) einen Sicherheitsgurt, insbesondere einen Drei-Punkt-Sicherheitsgurt, aufweist.
